# EUROPEAN PATENT SPECIFICATION

(11) **EP 3 681 958 B1**
(45) Date of publication and mention of the grant of the patent: **10.08.2022**
(21) Application number: 18853360.8
(22) Date of filing: 10.09.2018
(51) Int. Cl.: C09D 5/02, B05D 7/14, C09D 123/08, C09D 123/14

(54) **PAINT COMPOSITIONS INCLUDING COPOLYMER FORMULATIONS FOR IMPROVING ADHESION TO METALLIC SUBSTRATES**
LACKZUSAMMENSETZUNGEN MIT COPOLYMERFORMULIERUNGEN ZUR VERBESSERUNG DER HAFTUNG AUF METALLISCHEN SUBSTRATEN
COMPOSITIONS DE PEINTURE CONTENANT DES FORMULATIONS DE COPOLYMÈRE DESTINÉES À AMÉLIORER L'ADHÉRENCE SUR DES SUBSTRATS MÉTALLIQUES

(30) Priority: 11.09.2017 US 201762556604 P
(43) Date of publication of application: 22.07.2020
(73) Proprietor: Honeywell International Inc., Morris Plains, NJ 07950 (US)
(72) Inventor: JABLON, Michael, Morris Plains New Jersey 07950 (US); SMITH, Gerald, Morris Plains New Jersey 07950 (US)
(74) Representative: Stepney, Gregory John
(86) International application number: PCT/US2018/050271
(87) International publication number: WO 2019/051415

(56) References cited:
- EP-A1- 0 970 757
- EP-A2- 1 958 991
- WO-A1-2011/030999
- WO-A1-2011/105529
- WO-A1-2016/118502
- WO-A2-2007/078598
- JP-A- 2010 053 301
- JP-A- 2016 501 292
- US-A1- 2002 007 012
- US-A1- 2005 031 792
- US-A1- 2014 170 428
- US-A1- 2015 218 426

## Description

### CROSS-REFERENCE TO RELATED APPLICATIONS

This Application claims the benefit of priority to U.S. Provisional Patent Application serial no. 62/556,604, filed September 11, 2017, and further claims the benefit of priority to U.S. Patent Application No. 16/126,357, filed on September 10, 2018.

### TECHNICAL FIELD

The present disclosure relates to copolymer formulations that may be added to various paint compositions for improving the adhesion of such paint compositions to metallic substrates, and associated methods.

### BACKGROUND

Many industrial processes require the application of paint compositions to metallic substrates. Such paint compositions desirably exhibit good adhesion to the metallic substrates. Adhesion refers to the strength of the bonds forming between the paint film and the metallic substrate. If there is insufficient adhesion, adhesive failure may result, exhibited by blistering that forms at the interface, lifting of the paint film, or any other situation that results from low adhesion at the interface. Examples of paint compositions are described in JP 2010 053301, WO 2011/105529, WO 2011/030999, EP 1958991, WO 2007/078598, EP 0970757, US 2015/218426 and JP 2016 501292.

It is therefore desirable to provide paint compositions that have improved adhesion qualities, particularly as applied to metallic substrates. Furthermore, other desirable features and characteristics of the inventive subject matter will become apparent from the subsequent detailed description of the inventive subject matter and the appended claims, taken in conjunction with this background of the inventive subject matter.

### BRIEF SUMMARY

In an exemplary embodiment, disclosed is a paint composition intended for application to a metallic substrate, wherein the paint composition is chosen from: semi-gloss finish paints or flat finish paints and includes an amount of a copolymer emulsion formulation for improving the adhesion of the paint composition to the metallic substrate, in accordance with claim 1. The metallic substrate may be chosen from generally any type of metal for example aluminum, steel, copper, cast iron, or galvanized steel, among others. The copolymer emulsion formulation consists of either (a) an ethylene / acrylic acid copolymer in emulsified form, or (b) a maleated polypropylene in emulsified form. The amount of the copolymer emulsion formulation is from 2% to 15%, on the basis of the dry polymer solids weight of the copolymer emulsion formulation compared to the total weight of the paint composition excluding the copolymer emulsion formulation.

In another exemplary embodiment, disclosed is a method for improving the adhesion of a paint composition to a metallic substrate, wherein the method includes the steps of: adding an amount of a copolymer emulsion formulation to the paint composition and applying the paint composition with the copolymer formulation added thereto to the metallic substrate, in accordance with claim 2. In yet another exemplary embodiment, disclosed is a metallic substrate having applied thereto the paint composition of claim 1, wherein the paint composition includes an amount of a copolymer emulsion formulation for improving the adhesion of the paint composition to the metallic substrate, in accordance with claim 3.

This brief summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

Hereinafter, the present disclosure will be described in conjunction with the following drawing figures, wherein:
FIGS. 1A - 1J are images showing the results of adhesion testing performed using semi-gloss paint compositions with various copolymer formulations applied to galvanized steel substrates;
FIGS. 2A - 2F are images showing the results of adhesion testing performed using semi-gloss paint compositions with various copolymer formulations applied to aluminum substrates;
FIGS. 3A - 3H are images showing the results of adhesion testing performed using flat paint compositions with various copolymer formulations applied to galvanized steel substrates;
FIGS. 4A - 4F are images showing the results of adhesion testing performed using flat paint compositions with various copolymer formulations applied to aluminum substrates.

### DETAILED DESCRIPTION

Embodiments of the present disclosure are broadly directed to the use of various copolymer emulsion formulations for improving the adhesion of various paint compositions to various metallic substrates. Embodiments of the present disclosure are also directed to the various paint compositions including the various copolymer emulsion formulations. Embodiments of the present disclosure are further directed to the various metallic substrates having applied thereto the various paint compositions including the various copolymer emulsion formulations. Still further, embodiments of the present disclosure are directed to methods of applying the various paint compositions including the various copolymer emulsion formulations to the various metallic substrates.

### Metallic Substrates

A metallic substrate may generally be regarded as a substrate that is composed of primarily or exclusively a metallic element. The embodiments of the present disclosure are suitable for use with various metallic substrates, examples of which may include the following, among others.

Steel: One exemplary substrate for use in accordance with the present disclosure is steel. Steel, and particularly steel with a smooth finish, is used in various in commercial application, such a building materials, that often require a paint coating. Steel is an alloy of iron and other elements, primarily carbon. Steel may be subjected to a variety of finishing process that reduce any surface roughness, such as polishing, which tends to reduce the ability of coatings, such as paint, to adhere to the surface.

Galvanized Steel: One exemplary substrate for use in accordance with the present disclosure is galvanized steel. Galvanization is the process of applying a protective zinc coating to steel, so as to protect the underlying steel from corrosive substances. A common method for galvanization is the "hot-dip" method, wherein the steel is immersed in a hot bath of molten zinc. This method results in a zinc coating surface, which has been demonstrated to reduce the ability of coatings, such as paint, to adhere to the surface.

Aluminum: One exemplary substrate for use in accordance with the present disclosure is aluminum. Aluminum, and particularly aluminum with a mill finish, is used in various in commercial application, such a building materials, that often require a paint coating. The mill finish refers to the surface texture of the aluminum after it exits a rolling mill, extrusion die, or drawing process. The mill finish has been demonstrated to present challenges for the ability of coatings, such as paint, to adhere to the surface.

### Paint Compositions Applied to the Metallic Substrates

The embodiments of the present disclosure contemplate the application of various paint compositions to the above-described metallic substrates, such as those described as follows, among others.

Paint typically contains four base ingredients, namely pigment, binder, liquid, and additives. Any or all of these ingredients may be a single component or may include multiple items. Pigment provides color to paint and also makes paint opaque, and pigment is usually of mineral or organic origin, and some pigments are artificially produced. "Prime" pigments provide color and opacity (opaque coverage). A common prime pigment is titanium dioxide, which is white and is used in latex and oil-based paints. Specialty or extender pigments may also be used. The extender pigments are often chosen for their impact on properties like scrub resistance, stain resistance, and chalk resistance. Alum or clay may be used for this purpose. These pigments are added to the paint to provide certain characteristics such as thickness, a certain level of gloss, and durability.

The binder holds the pigment and also adheres it to a surface, such as the metallic surfaces described above, and a binder composition may have more than one component. In latex paint, the latex resin is the binder. For example, in latex paint, the binder may be 100% acrylic, vinyl acrylic (polyvinyl acetate), or styreneated acrylic. The pigment particles may be insoluble and merely form a suspension in the binder. The binder "binds" the pigment into a tough, continuous film and as noted above helps the paint adhere to the surface. In many embodiments, the binder begins in the formulation as a liquid, before it dries (coalesces) into a dried film.

Liquids carry the pigment and binders, and the liquid is the part of the paint or coatings product that evaporates. The role of the liquid is to keep the paint in a fluid form for ease of application. Once applied to the surface it evaporates leaving a uniform film, which then dries to form a protective coating. The liquid used is primarily determined by the solubility of the binder. In oil-based and alkyd paints, the liquid is typically a paint thinner, and in latex paints, the liquid is typically water.

Additives are ingredients used at low levels to provide certain properties, such as but not limited to: mildew resistance, better flow and leveling, and splatter resistance. Common additives used in conventional paint formulations include rheology modifiers, surfactants, defoamers, coalescents, and biocides. Other numerous additives are well-known in the art and may be utilized as required to formulate a paint having the desired properties.

With regard to any paint composition, various techniques are known in the art for producing paints having various types of sheens, i.e. "shine" or gloss. For example, by incrementally increasing pigment levels and/or by using larger pigment particles, various gloss levels can be achieved including, but not limited to flat, satin, and semi-gloss.

### Copolymer Formulations Added to the Paint Compositions for Improved Adhesion

In accordance with embodiments of the present disclosure, various copolymer formulations may be added to any of the paint compositions described above, for purposes of improving the adhesion of the paint compositions to the aforementioned metallic substrates. The copolymer formulations preferably provided as emulsions, particularly oil-in-water emulsions. The description of any copolymer should therefore be understood to include its use in emulsified form. The various copolymer formulations include, among others, the following.

(1) An oil-in-water emulsion of an ethylene acrylic acid copolymer having active solids of 38.5 - 41.4%, and a viscosity of less than or equal to about 100cp (Brookfield viscosity at 25 °C). This copolymer formulation is available from Honeywell International Inc. as Cohesa^{®} 3050. (2) An oil-in-water emulsion of a high-density oxidized polyethylene, having active solids of about 25 - 60%, and a viscosity at 25 °C within the range of about 50cp to about 100cp (Brookfield viscosity at 25 °C). This copolymer formulation is available from Honeywell International Inc. as Cohesa^{®} 1020.

Ethylene acrylic acid (E/AA) copolymers prepared in the form of an emulsion: (1) An ethylene acrylic acid copolymer having a Mettler Drop Point of 92 °C (ASTM D-3954), Hardness of 8.0 dmm (ASTM D-5), a Density of 0.93 g/cm³ (ASTM D-1505), a Viscosity at 140 °C of 600 cps (Brookfield Thermosel), and an Acid Number of 120, wherein the AA content is about 15% (ASTM D-1386). This copolymer is available from Honeywell International Inc. as A-C^{®} 5120. (2) An ethylene acrylic acid copolymer having a Mettler Drop Point of 92 °C (ASTM D-3954), Hardness of 7.0 dmm (ASTM D-5), a Density of 0.93 g/cm³ (ASTM D-1505), a Viscosity at 140 °C of 1100 cps (Brookfield Thermosel), and an Acid Number of 135, wherein the AA content is about 17% (ASTM D-1386). This copolymer is available from Honeywell International Inc. as A-C^{®} 5135. (3) An ethylene acrylic acid copolymer having a Mettler Drop Point of 90 °C (ASTM D-3954), Hardness of 10.0 dmm (ASTM D-5), a Density of 0.93 g/cm³ (ASTM D-1505), a Viscosity at 140 °C of 1000 cps (Brookfield Thermosel), and an Acid Number of 150, wherein the AA content is about 19% (ASTM D-1386). This copolymer is available from Honeywell International Inc. as A-C^{®} 5150. (4) An ethylene acrylic acid copolymer having a Mettler Drop Point of 76 °C (ASTM D-3954), Hardness of 50.0 dmm (ASTM D-1321), a Density of 0.93 g/cm³ (ASTM D-1505), a Viscosity at 140 °C of 625 cps (Brookfield Thermosel), and an Acid Number of 185, wherein the AA content is about 23% (ASTM D-1386). This copolymer is available from Honeywell International Inc. as A-C^{®} 5180. Accordingly, in general, some of the ethylene acrylic acid copolymer synthetic waxes suitable for use herein are those that have a Mettler Drop Point from 70 °C to 95°C (ASTM D-3954), Hardness from 1.0 to 100 dmm (ASTM D-5 (or ASTM D-1321)), a Density from 0.91 to 0.95 g/cm³ (ASTM D-1505), Viscosity at 140 °C from 500 - 1500 cps (Brookfield Thermosel), an acid number from 20 to 200 (ASTM D-1386), which is an AA content of from 5 - 30%.

Propylene maleic anhydride copolymers prepared in the form of an emulsion: A propylene maleic anhydride copolymer, which may be provided in anionic or nonionic emulsions, having an ASTM D-5 hardness of less than 0.5dmm, viscosity at 190 °C of 350cp, a Mettler drop point of 141 °C, and a density of 0.94 g/cm³. This copolymer formulation is available from Honeywell International Inc. as A-C^{®} 597P.

Also described are low density oxidized ethylene vinyl acetate copolymers prepared in the form of an emulsion: An oxidized ethylene vinyl acetate copolymer, which may be provided in anionic or nonionic emulsions, having an ASTM D-5 hardness of 5.0, a viscosity at 140 °C of 375cp, a Mettler drop point of 99 °C, and a density of 0.94 g/cm³. This copolymer formulation is available from Honeywell International Inc. as A-C^{®} 645P.

### Adding the Copolymer Formulations to the Paint Compositions

In accordance with the present disclosure, the above-described copolymer formulations are added to the above-described paint compositions that may be applied to metallic substrates. The amount of the copolymer formulation added to a paint composition may be based on the weight of copolymer solids added compared with total paint composition weight excluding copolymer. In some embodiments, the copolymer formulations may be added from 2% to 15%. In particular examples, the amount may be any of about 2%, about 5%, about 10%, or about 15%, on this basis, or any range between any two of the foregoing.

The copolymer formulations may be added to the paint compositions using any suitable mixing technique, such as low to moderate agitation for a time period that may range from several minutes to several hours, but is usually from about 1 minute to about 10 minutes. The temperature at which mixing is performed may be about room temperature (for example, about 20 °C), and no heat is required to be added.

### Application to Metallic Substrates - Testing

In accordance with embodiments of the present disclosure, the above-described mixture of paint compositions and copolymer formulations may be applied to the above-described metallic substrates. This application process may be performed using any conventional wet film application technique, such as a drawdown bar, brush, roller, or sprayer, for example.

### Testing Protocol

The following testing protocol was in use to prepare all of the Examples set forth in this disclosure: Paint compositions and copolymer formulations were mixed using the Speed Mixer, DAC 150 FVZ-K, for three cycles of two minute intervals, for a total of six minutes. The amount of the copolymer formulation added to a paint composition, based on the weight of copolymer solids added compared with total paint composition weight excluding copolymer, varied from example to example, but was either 2%, 5%, 10%, or 15%. Four different copolymers were tested: A-C^{®} 597 anionic emulsion (propylene maleic anhydride copolymer); A-C^{®} 5150 emulsion (ethylene acrylic acid copolymer); A-C^{®} 645 emulsion (low density oxidized ethylene vinyl acetate copolymer); Cohesa^{®} 3050 emulsion (ethylene acrylic acid copolymer).

Panel substrates of mill-finish aluminum and hot-dipped galvanized steel were prepared. Each panel substrate was cleaned with mineral spirits before coating. All panel substrates were allowed to dry for one hour before coating. The panel substrates were then coated with a semi-gloss finish exterior paint and a flat finish exterior paint with a 3-mil drawdown bar. Panel substrates were dried for 24 hours and the drying conditions recorded (64- 69 °F; 49% - 87% relative humidity). After coated panel substrates were dry, a razor blade was used to scribe the coating, horizontally and vertically, in a cross-hatch pattern. Then, using Elcometer 99 tape (ASTM D-3359), the tape was pressed down firmly on the cross hatched section, and peeled back from each panel substrate consistently. The percentage of paint removed was then recorded and compared against a "control" panel substrate, which had the same paint applied thereto but without any copolymer formulation added.

### Example 1 - Galvanized Steel, Semi-Gloss Paint Compositions

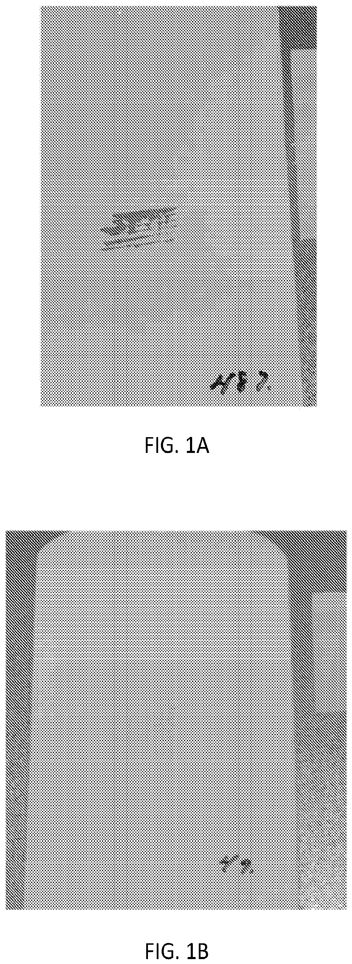

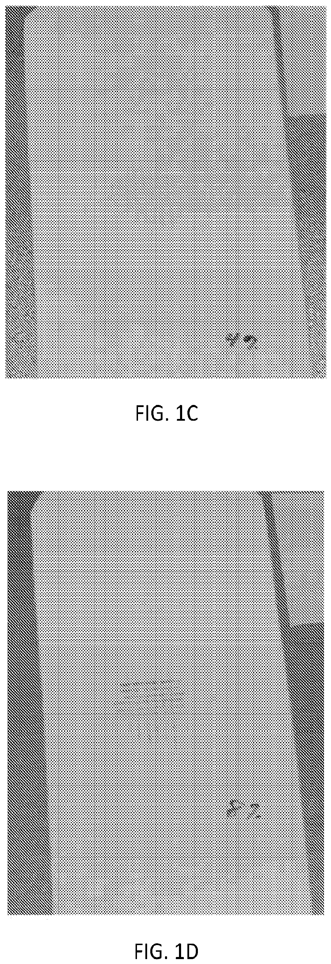

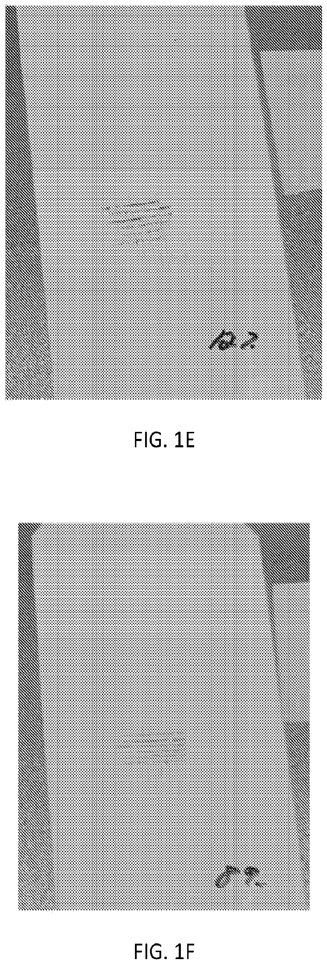

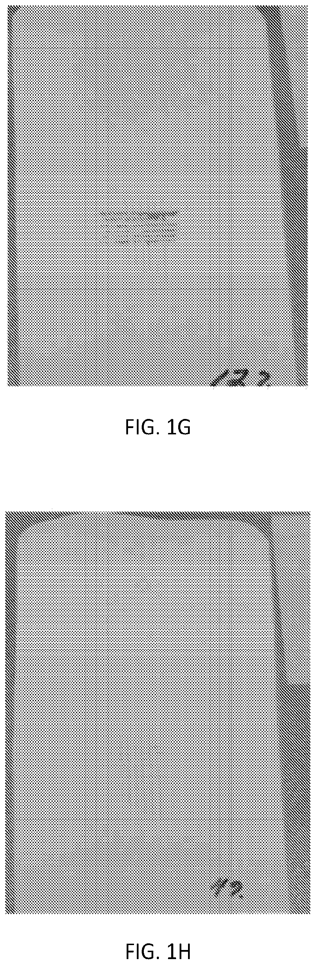

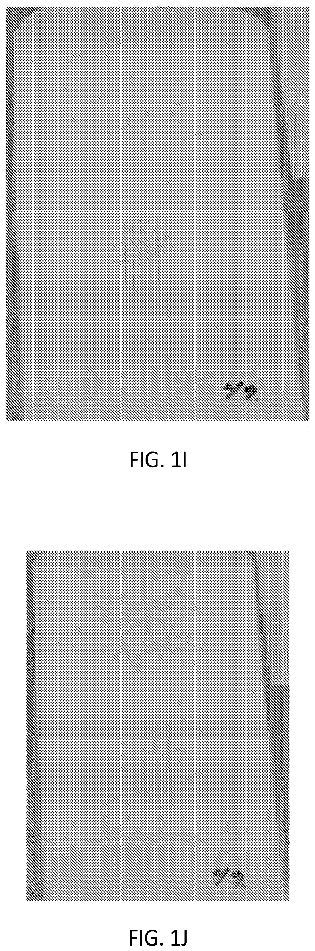

Semi-gloss paint, with various copolymer formulations mixed therewith, was applied to galvanized steel substrates in accordance with the testing protocol. The "control" example (FIG. 1A) exhibited 48% paint removal. The paint with 2%, 5%, and 10% Cohesa^{®} 3050 exhibited 4%, 4%, and 8% paint removal, respectively (FIGS. 1B, 1C, and 1D). The paint with 2% and 5% A-C^{®} 5150 exhibited 12% and 8% paint removal, respectively (FIGS. 1E and 1F). The paint with 2%, 5%, 10%, and 15% anionic A-C^{®} 597P exhibited 12%, 4%, 4%, and 4% paint removal, respectively (FIGS. 1G, 1H, 1I, and 1J).

### Example 2 -Aluminum Substrate, Semi-Gloss Paint Compositions

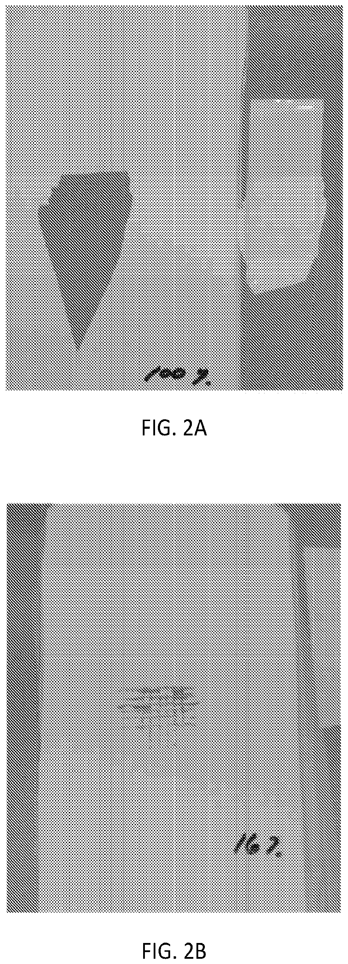

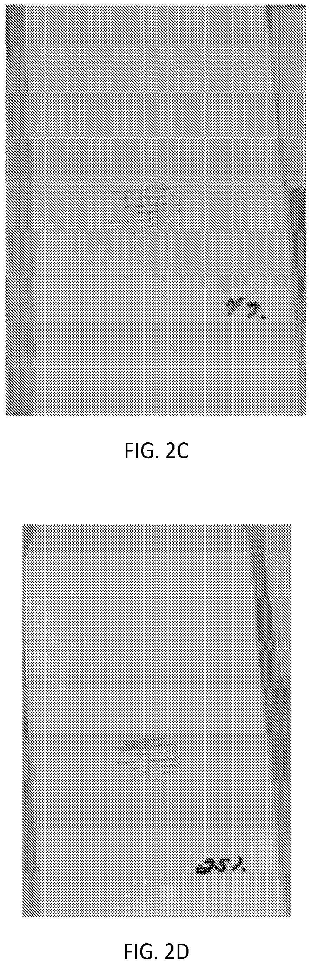

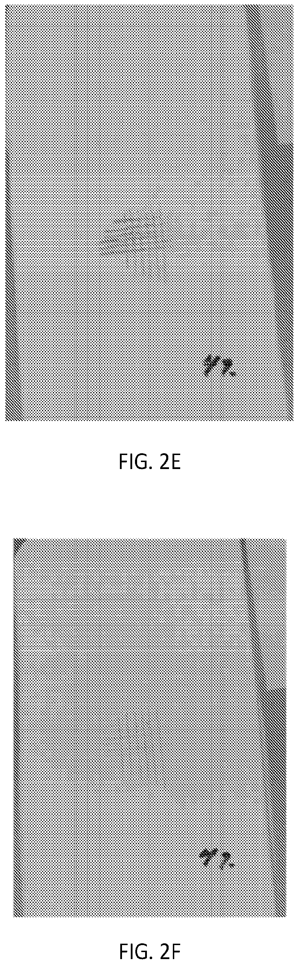

Semi-gloss paint, with various copolymer formulations mixed therewith, was applied to galvanized steel substrates in accordance with the testing protocol. The "control" example (FIG. 2A) exhibited 100% paint removal. The paint with 10% and 15% A-C^{®} 5150 exhibited 16% and 4% paint removal, respectively (FIGS. 2B and 2C). The paint with 5%, 10%, and 15% anionic A-C^{®} 597P exhibited 25%, 4%, and 4% paint removal, respectively (FIGS. 2D, 2E, and 2F).

### Example 3 - Galvanized Steel Substrate, Flat Paint Compositions

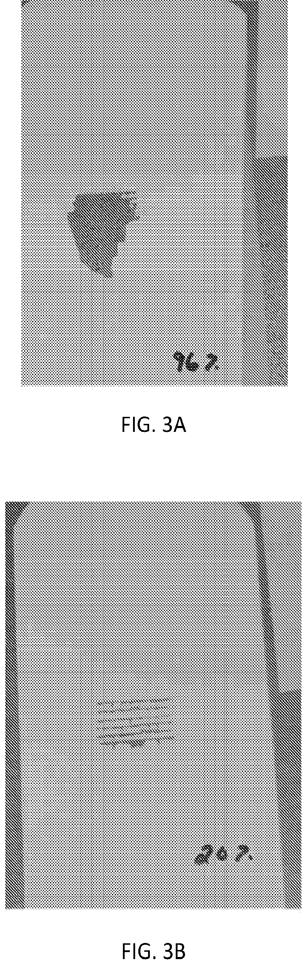

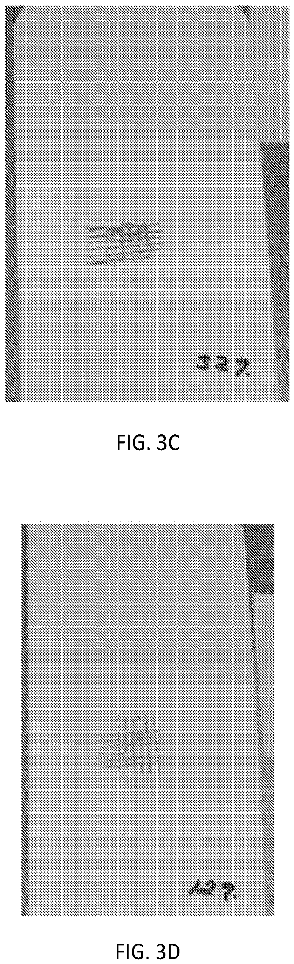

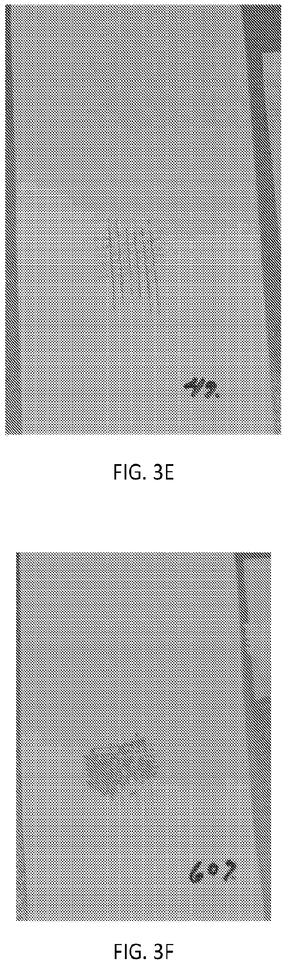

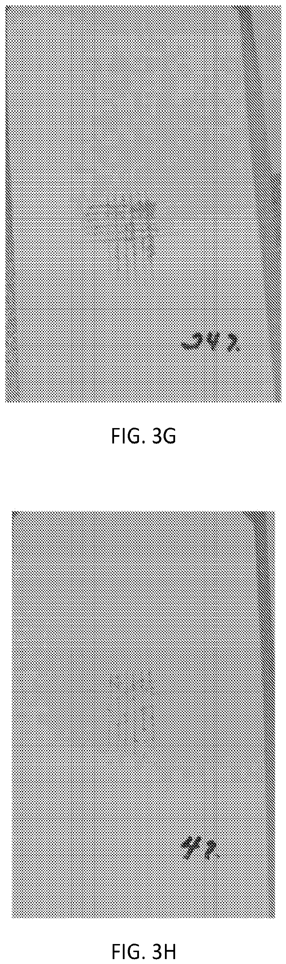

Flat paint, with various copolymer formulations mixed therewith, was applied to galvanized steel substrates in accordance with the testing protocol. The "control" example (FIG. 3A) exhibited 96% paint removal. The paint with 2%, 5%, 10%, and 15% A-C^{®} 5150 exhibited 20%, 32%, 12%, and 4% paint removal, respectively (FIGS. 3B, 3C, 3D, 3E). The paint with 2%, 5%, and 15% anionic A-C^{®} 597P exhibited 60%, 24%, and 4% paint removal, respectively (FIGS. 3F, 3G, and 3H).

### Example 4 -Aluminum Substrate, Flat Paint Compositions

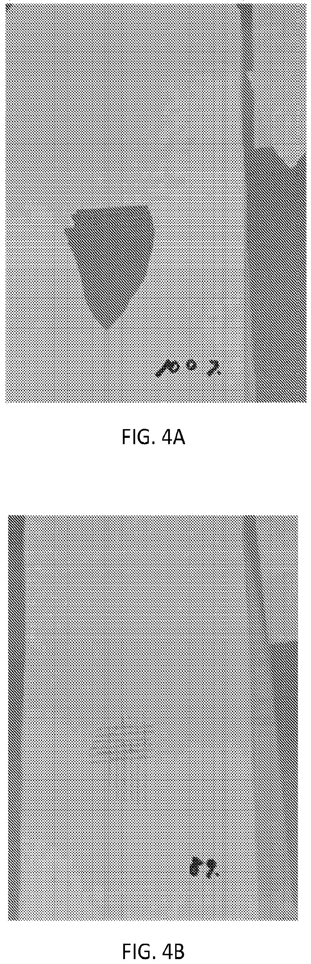

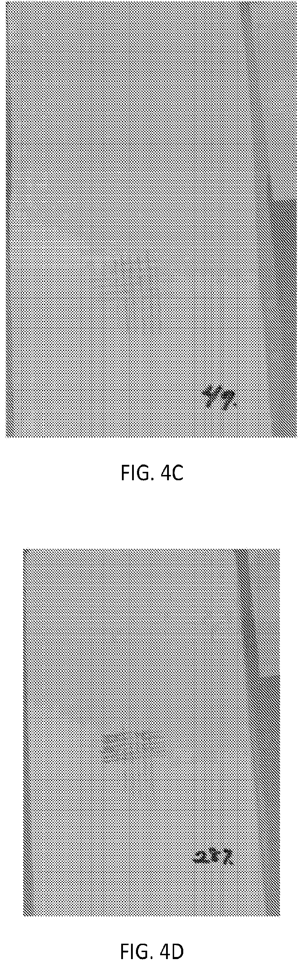

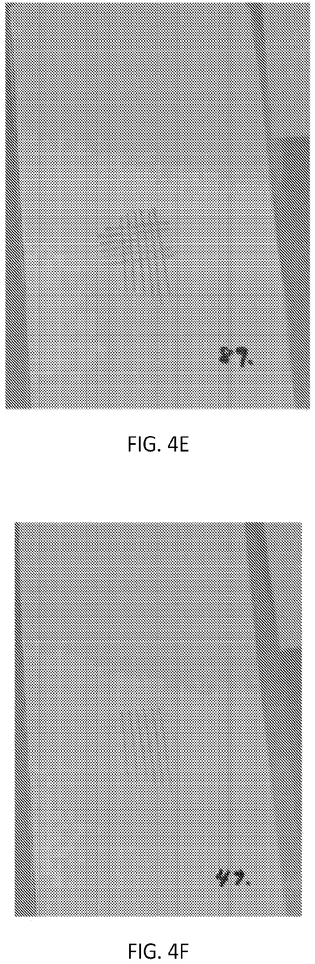

Flat paint, with various copolymer formulations mixed therewith, was applied to galvanized steel substrates in accordance with the testing protocol. The "control" example (FIG. 4A) exhibited 100% paint removal. The paint with 10% and 15% A-C^{®} 5150 exhibited 8% and 4% paint removal, respectively (FIGS. 4B and 4C). The paint with 5%, 10%, and 15% anionic A-C^{®} 597P exhibited 28%, 8%, and 4% paint removal, respectively (FIGS. 4D, 4E, and 4F).

Accordingly, the present disclosure has provided copolymer formulations that may be added to various paint compositions for improving the adhesion of such compositions to metallic substrates. While at least one exemplary embodiment has been presented in the foregoing detailed description of the inventive subject matter, it should be appreciated that a vast number of variations exist. It should also be appreciated that the exemplary embodiment or exemplary embodiments are only examples, and are not intended to limit the scope, applicability, or configuration of the inventive subject matter in any way. Rather, the foregoing detailed description will provide those skilled in the art with a convenient road map for implementing an exemplary embodiment of the inventive subject matter. It being understood that various changes may be made in the function and arrangement of elements described in an exemplary embodiment without departing from the scope of the inventive subject matter as set forth in the appended claims.

## Claims

1. A paint composition for application to a metallic substrate, wherein the paint composition is chosen from: semi-gloss finish paints or flat finish paints and comprises an amount of a copolymer emulsion formulation;
wherein the copolymer emulsion formulation consists of either (a) an ethylene / acrylic acid copolymer in emulsified form; or (b) a propylene maleic anhydride copolymer in an emulsified form; and
wherein the amount of the copolymer emulsion formulation is from 2% to 15% on the basis of the dry polymer solids weight of the copolymer emulsion formulation compared to the total weight of the paint composition excluding the copolymer emulsion formulation.

2. A method for improving the adhesion of a paint composition to a metallic substrate, wherein the paint composition is chosen from: semi-gloss finish paints or flat finish paints and wherein the method comprises the steps of:
(1) adding an amount of a copolymer emulsion formulation to the paint composition,
wherein the copolymer emulsion formulation consists of either (a) an ethylene / acrylic acid copolymer in an emulsified form; or (b) a propylene / maleic anhydride copolymer in an emulsified form, and
wherein the amount of the copolymer emulsion formulation is from 2% to 15% on the basis of the dry polymer solids weight of the copolymer emulsion formulation compared to the total weight of the paint composition excluding the copolymer emulsion formulation; and
(2) applying the paint composition with the copolymer emulsion formulation added thereto to the metallic substrate, wherein the metallic substrate is chosen from: aluminum or galvanized steel.

3. A metallic substrate having applied thereto the paint composition of claim 1, wherein the metallic substrate is chosen from: aluminum or galvanized steel.

## Patentansprüche

1. Lackzusammensetzung zum Auftragen auf ein metallisches Substrat, wobei die Lackzusammensetzung aus seidenmatten Decklacken oder glanzlosen Decklacken ausgewählt ist und eine Menge einer Copolymer-Emulsionsformulierung umfasst;
wobei die Copolymer-Emulsionsformulierung entweder aus (a) einem EthylenAcrylsäure-Copolymer in emulgierter Form oder (b) einem Propylen-Maleinsäureanhydrid-Copolymer in emulgierter Form besteht; und
wobei die Menge der Copolymer-Emulsionsformulierung 2 % bis 15 % bezogen auf das Polymerfeststoff-Trockengewicht der Copolymer-Emulsionsformulierung gegenüber dem Gesamtgewicht der Lackzusammensetzung ohne die Copolymer-Emulsionsformulierung beträgt.

2. Verfahren zur Verbesserung der Haftung einer Lackzusammensetzung auf einem metallischen Substrat, wobei die Lackzusammensetzung aus seidenmatten Decklacken oder glanzlosen Decklacken ausgewählt ist, und wobei das Verfahren die Schritte umfasst:
(1) Zugeben einer Menge einer Copolymer-Emulsionsformulierung zur Lackzusammensetzung,
wobei die Copolymer-Emulsionsformulierung entweder aus (a) einem EthylenAcrylsäure-Copolymer in emulgierter Form oder (b) einem Propylen-Maleinsäureanhydrid-Copolymer in emulgierter Form besteht, und
wobei die Menge der Copolymer-Emulsionsformulierung 2 % bis 15 % bezogen auf das Polymerfeststoff-Trockengewicht der Copolymer-Emulsionsformulierung gegenüber dem Gesamtgewicht der Lackzusammensetzung ohne die Copolymer-Emulsionsformulierung beträgt; und
(2) Auftragen der Lackzusammensetzung mit der dazu zugegebenen Copolymer-Emulsionsformulierung auf das metallische Substrat, wobei das metallische Substrat ausgewählt ist aus: Aluminium oder verzinktem Stahl.

3. Metallisches Substrat, das die Lackzusammensetzung nach Anspruch 1 darauf aufgetragen aufweist, wobei das metallische Substrat ausgewählt ist aus: Aluminium oder verzinktem Stahl.

## Revendications

1. Composition de peinture destinée à être appliquée sur un substrat métallique, la composition de peinture étant choisie parmi : des peintures de finition semi-brillantes ou des peintures de finition mates et comprenant une quantité d'une formulation d'émulsion de copolymère ;
la formulation d'émulsion de copolymère étant constituée soit (a) d'un copolymère d'acide acrylique/éthylène sous une forme émulsifiée ; soit (b) d'un copolymère anhydride maléique de propylène sous une forme émulsifiée ; et
la quantité de la formulation d'émulsion de copolymère étant comprise entre 2 % et 15 % en poids de matières solides de polymère sec de la formulation d'émulsion de copolymère par rapport au poids total de la composition de peinture excluant la formulation d'émulsion de copolymère.

2. Procédé d'amélioration de l'adhérence d'une composition de peinture sur un substrat métallique, la composition de peinture étant choisie parmi : des peintures de finition semi-brillantes ou des peintures de finition mates et le procédé comprenant les étapes consistant :
(1) à ajouter une quantité d'une formulation d'émulsion de copolymère à la composition de peinture,
la formulation d'émulsion de copolymère étant constituée soit (a) d'un copolymère d'acide acrylique/éthylène sous une forme émulsifiée ; soit (b) d'un copolymère anhydride maléique de propylène sous une forme émulsifiée ; et
la quantité de la formulation d'émulsion de copolymère étant comprise entre 2 % et 15 % en poids de matières solides de polymère sec de la formulation d'émulsion de copolymère par rapport au poids total de la composition de peinture excluant la formulation d'émulsion de copolymère ; et
(2) à appliquer la composition de peinture à l'aide de la formulation d'émulsion de copolymère ajoutée à celle-ci sur le substrat métallique, le substrat métallique étant choisi parmi : l'aluminium et l'acier galvanisé.

3. Substrat métallique sur lequel a été appliquée la composition de peinture selon la revendication 1, le substrat métallique étant choisi parmi : l'aluminium et l'acier galvanisé.
